# EUROPEAN PATENT APPLICATION

(11) **EP 4 822 855 A2**
(43) Date of publication of application: **14.10.2026**
(21) Application number: 26192594.5
(22) Date of filing: 23.12.2022
(51) Int. Cl.: H01M 50/249

(54) **BATTERY MODULE WITH REINFORCED SAFETY**

(30) Priority: 23.12.2021 KR 20210186634
(62) Document number(s) of the earlier application(s) in accordance with Art. 76 EPC: 22912048.0 / 4 333 185
(71) Applicant: LG Energy Solution, Ltd., Seoul 07335 (KR)
(72) Inventor: KIM, Kwang-Mo, 34122 Daejeon (KR); SEONG, Jun-Yeob, 34122 Daejeon (KR); JUNG, Hye-Mi, 34122 Daejeon (KR)
(74) Representative: Plasseraud IP

(57) **Abstract**

Disclosed is a battery module with an improved structure to improve safety. The battery module includes a cell assembly having at least one battery cell; a body frame configured to accommodate the cell assembly in an inner space and having an open portion formed in at least one side; an end frame coupled to the open portion of the body frame and having at least one of a terminal portion and a connector portion; and a blocking member interposed between the end frame and the cell assembly and configured to block the movement of flame.

## Description

### TECHNICAL FIELD

The present application claims priority to Korean Patent Application No. 10-2021-0186634 filed on December 23, 2021 in the Republic of Korea, the disclosures of which are incorporated herein by reference.

The present disclosure relates to a battery, and more particularly, to a battery module with reinforced safety, and a battery pack and a vehicle including the battery same.

### BACKGROUND ART

As the demand for portable electronic products such as smart phones, notebook and wearable devices is rapidly increasing and robots and electric vehicles are commercialized in earnest, high-performance secondary batteries capable of repeated charging and discharging are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

In many cases, the lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries (battery cells) may constitute one battery module in such a form that a plurality of secondary batteries are electrically connected and are stored together in a module case. In addition, a plurality of battery modules may be connected to form one battery pack.

However, when a plurality of battery modules are included in the battery pack, it may be vulnerable to a thermal chain reaction between the battery modules. For example, when an event such as thermal runaway occurs inside one battery module, propagation of the thermal runaway to another battery module needs to be suppressed. If the propagation of thermal runaway between battery modules is not suppressed, an event occurring in a specific battery module may cause a chain reaction in several battery modules, which may cause an explosion or fire or increase its scale.

In particular, when an event such as thermal runaway occurs in any one battery module, a flame or the like may be emitted to the outside. At this time, if the emission of the flame is not properly controlled, the flame may be discharged toward other battery modules, which may be highly likely to cause a thermal chain reaction of other battery modules.

The battery module is configured in a form that six sides composed of upper, lower, left, right, front and rear sides are surrounded by frames around the cell assembly accommodated therein. However, in the case of a conventional battery module, in a situation where a thermal runaway or the like occurs inside, there is a high possibility that the flame or the like is not completely blocked but exposed to the outside.

In particular, in a typical battery module, a module terminal for supplying and charging electric energy or a module connector for sensing voltage or temperature is often provided to be exposed to the outside. However, in order to expose the module terminal or the module connector the outside, a hole must be formed in the module frame, and a gap is formed between the hole and the module terminal or the module connector due to tolerance, so there is a risk that a flame or spark is emitted to the outside.

Moreover, around the module terminal or the module connector, an electrically insulating injection molding material may be wrapped in order to secure an insulation distance or watertightness with other parts. However, in situations such as thermal runaway, there is a high risk of flame ejection toward the module terminal or the module connector. Moreover, when exposed to gas and heat, the insulating injection molding material may melt, and the spot where the insulating injection molding material is located may be left as an empty space. In addition, this empty space becomes a passage through which a large amount of flame is ejected, which may propagate a thermal runaway situation to other battery modules or cause a fire in other external components. In addition, this empty space may be a passage through which external air or the like is introduced to the inside. Therefore, there is a risk of causing a fire in the corresponding battery module or increasing the scale of the fire.

### DISCLOSURE

### Technical Problem

The present disclosure is designed to solve the problems of the related art, and therefore the present disclosure is directed to providing a battery module with an improved structure to effectively suppress heat propagation by flame or the like generated inside the battery module, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a cell assembly having at least one battery cell; a body frame configured to accommodate the cell assembly in an inner space and having an open portion formed in at least one side; an end frame coupled to the open portion of the body frame and having at least one of a terminal portion and a connector portion; and a blocking member interposed between the end frame and the cell assembly and configured to block the movement of flame.

Here, the cell assembly may include a plurality of pouch-type batteries arranged in a horizontal direction in a form where electrode leads are disposed toward the open portion of the body frame.

In addition, the blocking member may be configured to block the movement of flame toward at least one of the terminal portion and the connector portion.

In addition, the blocking member may have an air-permeable structure.

In addition, the blocking member may include a fabric portion configured in a woven form of a plurality of fibers.

In addition, the fabric portion may use at least one of silica fiber and glass fiber.

In addition, the blocking member may further include a body portion.

In addition, the fabric portion may be located in a part of the body portion.

In addition, the blocking member may be partially configured to have different permeability.

In addition, the blocking member may be configured such that an upper portion has lower permeability than a lower portion.

In addition, the blocking member may be configured such that an upper portion has a greater stack number than a lower portion.

In addition, the blocking member may have an upper end bent toward the cell assembly.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to an embodiment of the present disclosure, heat propagation (thermal propagation) between battery modules may be effectively suppressed.

In particular, when a thermal event occurs, a flame containing a spark along with a large amount of venting gas may be generated inside the battery cell. According to the embodiment of the present disclosure, it is possible to suppress the emission of the flame or spark to the outside and regulating its direction while emitting the venting gas.

Moreover, in the case of a battery module employing a pouch-type battery as a battery cell, when a thermal event occurs, gas or flame may be intensively emitted at the front and rear sides where electrode leads are located. Therefore, the flame or spark along with the venting gas are likely to be collected in the terrace portion of the battery cell. However, according to the embodiment of the present disclosure, the flame may be effectively controlled even in this case.

Moreover, according to an embodiment of the present disclosure, it is possible to effectively prevent a fire from occurring or spreading by blocking a flame that may act as a heat source, which is one of three conditions for a fire, while allowing the venting gas to be discharged smoothly.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a front perspective view schematically showing a battery module according to an embodiment of the present disclosure.
FIG. 2 is a rear perspective view showing the battery module according to an embodiment of the present disclosure.
FIG. 3 is an exploded perspective view showing the battery module according to an embodiment of the present disclosure.
FIG. 4 is a cross-sectional view showing a part of the battery module according to an embodiment of the present disclosure.
FIG. 5 is an enlarged view showing the portion A2 in FIG. 4.
FIG. 6 is an exploded perspective view schematically showing some components of a cell assembly according to an embodiment of the present disclosure.
FIG. 7 is a diagram schematically showing a functional configuration of a blocking member according to an embodiment of the present disclosure.
FIG. 8 is a diagram schematically showing a functional configuration of a blocking member included in a battery module according to another embodiment of the present disclosure.
FIG. 9 is an enlarged view schematically showing configurations of different parts of one blocking member according to an embodiment of the present disclosure.
FIG. 10 is a perspective view schematically showing a configuration of a blocking member included in a battery module according to still another embodiment of the present disclosure.
FIGS. 11 and 12 are perspective views schematically showing a configuration of a blocking member included in the battery module according to an embodiment of the present disclosure as viewed from the front and rear.
FIG. 13 is a perspective view showing a configuration of a blocking member included in a battery module according to another embodiment of the present disclosure as viewed from the rear.
FIG. 14 is an enlarged cross-sectional view showing the portion A6 in FIG. 13.
FIG. 15 is an enlarged cross-sectional view showing some components of a blocking member according to still another embodiment of the present disclosure.
FIG. 16 is a diagram schematically showing a configuration of a battery pack according to an embodiment of the present disclosure as viewed from the above.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of description, it is obvious to those skilled in the art that they may vary depending on the location of a target object or the location of an observer. In particular, in each drawing, it may be regarded that the X-axis direction represents the front and rear direction, the Y-axis direction represents the left and right direction, and the Z-axis direction represents the upper and lower direction, respectively.

Also, in this specification, terms such as "inner" or "outer" may be used for each component, and, unless otherwise specified, the term "inner" may mean a direction toward the center of the battery module in each component, and the term "outer" may mean the opposite direction.

In addition, in this specification, several embodiments may be included, and for each embodiment, any feature that can be applied identically or similarly is not described in detail, and a feature having a difference will be described in detail.

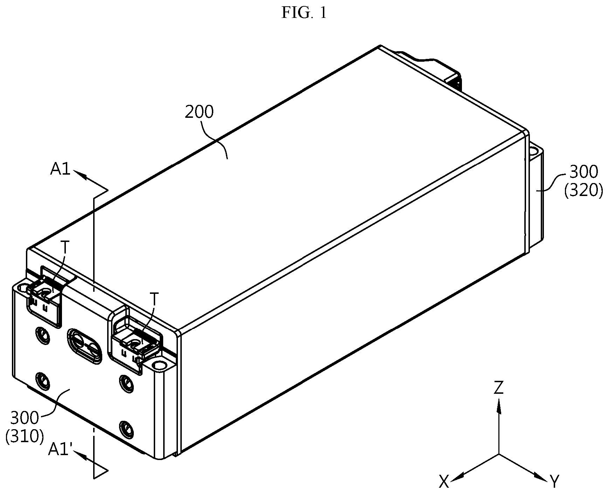

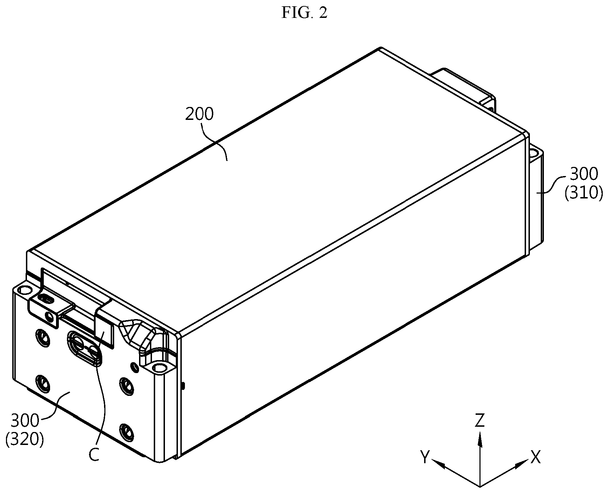

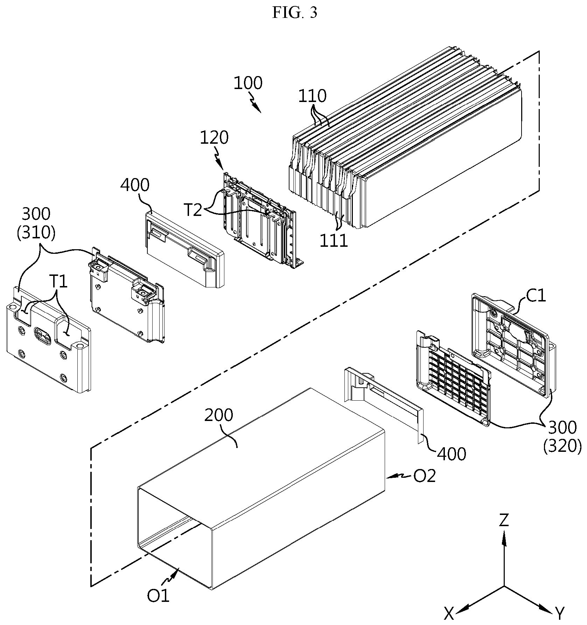

FIG. 1 is a front perspective view schematically showing a battery module according to an embodiment of the present disclosure, and FIG. 2 is a rear perspective view showing the battery module according to an embodiment of the present disclosure. Also, FIG. 3 is an exploded perspective view showing the battery module according to an embodiment of the present disclosure.

Referring to FIGS. 1 to 3, a battery module according to the present disclosure includes a cell assembly 100, a body frame 200, an end frame 300, and a blocking member 400.

The cell assembly 100 includes at least one battery cell 110. The battery cell 110 may include an electrode assembly, an electrolyte, and a battery case. In particular, the battery cell 110 may be a pouch-type secondary battery. Moreover, a plurality of battery cells 110 may be included in the cell assembly 100. For example, as shown in FIG. 3, in a state where a plurality of pouch-type batteries are erected in the upper and lower direction (Z-axis direction), the plurality of pouch-type batteries may can be arranged side by side to be stacked in the horizontal direction (left and right direction, Y-axis direction).

Each battery cell 110 may include electrode leads 111. In this case, the electrode leads 111 may be located at both ends or at one end of each battery cell 110. The plurality of battery cells 110 may be electrically connected to each other in series and/or parallel through the electrode leads 111. At this time, the electrode leads 111 of the battery cells 110 may be directly connected by contacting each other, or may be indirectly connected through a bus bar or the like. Meanwhile, as shown in FIG. 3, a secondary battery in which the electrode leads 111 protrude in both directions may be referred to as a bidirectional cell. Meanwhile, a secondary battery in which the electrode leads 111 protrude in one direction may be referred to as a unidirectional cell.

However, the present disclosure is not limited by the specific type or form of these secondary batteries, and various types of secondary batteries known at the time of filing of this application may be employed in the cell assembly 100 of the present disclosure.

The body frame 200 may have an empty space formed therein so that the cell assembly 100 may be accommodated in this inner space. In addition, an open portion may be formed in at least one side of the body frame 200. For example, the body frame 200 may have a hollow tubular shape, as shown in FIGS. 1 to 3. More specifically, the body frame 200 may be formed in a square tube shape. This type of body frame 200 may be referred to as a term such as mono frame. In this case, an upper portion, a lower portion, a left portion, and a right portion of the body frame 200 based on the inner space may be closed, and an open portion may be formed in a front portion and a rear portion.

The body frame 200 may be made of a material having a certain level of rigidity or more in order to stably protect the cell assembly 100 accommodated therein. For example, the body frame 200 may be made of a plastic material or a metal material such as steel, SUS, and aluminum.

The end frame 300 may be coupled to the open portion of the body frame 200. For example, as shown in FIG. 3 and the like, an open portion as indicated by O1 may be formed in the front side of the body frame 200, and an open portion as indicated by O2 may be formed in the rear side of the body frame 200. In this case, the end frame 300 may also be configured to be coupled to the front open portion O1 and the rear open portion O2 of the body frame 200, respectively. To this end, the end frame 300 may include a front frame 310 and a rear frame 320.

The end frame 300 may be coupled to the body frame 200 by various methods such as welding or bolting. In addition, the end frame 300 may close the inner space of the body frame 200 by being coupled to the open portion of the body frame 200 in this way.

The end frame 300 may be made of plastic or metal. In particular, the end frame 300 may be made of a material identical or similar to that of the body frame 200 or may have such a material. In this case, when the end frame 300 is welded or attached to the body frame 200, the coupling property may be improved.

The end frame 300 may have a terminal portion, as indicated by T in FIG. 1. The terminal portion T is a portion for connecting the battery module to other external components, such as another battery module or a pack terminal, and may be a terminal through which a charging/discharging power flows. The terminal portion T may include a positive electrode terminal and a negative electrode terminal. As shown in FIG. 1, the positive electrode terminal and the negative electrode terminal may be formed together on one end frame 300, for example the front frame 310. As another example, the positive electrode terminal and the negative electrode terminal may be formed on different frames, such as the front frame 310 and the rear frame 320, respectively.

The terminal portion T formed on the end frame 300 may be configured such that a module terminal on the cell assembly 100 is exposed to the outside. For example, referring to FIG. 3, the cell assembly 100 may include a module terminal made of a metallic material as indicated by T2. The module terminal T2 may be connected to the electrode lead 111 of the battery cell 110. In this case, the module terminal T2 may be made of an electrically conductive material, for example a metal material such as copper, aluminum, and nickel. In addition, a terminal hole having a shape indicated by T1 may be formed in the end frame 300 so that the module terminal T2 may be exposed to the outside. For example, two terminal holes T1 may be formed in the front frame 310, so that a positive electrode terminal and a negative electrode terminal are exposed to the outside through the terminal holes T1, respectively.

In addition, as indicated by C in FIG. 2, the end frame 300 may have a connector portion. The connector portion C may be configured to transmit and receive information between internal components of the battery module and external components. For example, a control unit such as a battery management system (BMS) may be provided outside the battery module. At this time, the BMS may be connected to the connector portion C to collect information about voltage or current of the cell assembly 100, internal or external temperature of the battery module, and the like.

The connector portion C formed on the end frame 300 may be configured such that a connector terminal on the cell assembly 100 is exposed to the outside. For example, referring to FIG. 3, a connector terminal may be provided on the rear side of the cell assembly 100. In addition, a connector hole having a shape as indicated by C1 may be formed in the end frame 300 so that the connector terminal may be exposed to the outside. For example, one connector hole C1 may be formed in the rear frame 320, so that a connector terminal on the cell assembly 100 is exposed to the outside through the connector hole C1.

As shown in FIG. 3, a blocking member 400 may be interposed between the end frame 300 and the cell assembly 100. For example, the blocking member 400 may be interposed between the front side of the cell assembly 100 and the front frame 310. In addition, the blocking member 400 may be interposed between the rear side of the cell assembly 100 and the rear frame 320.

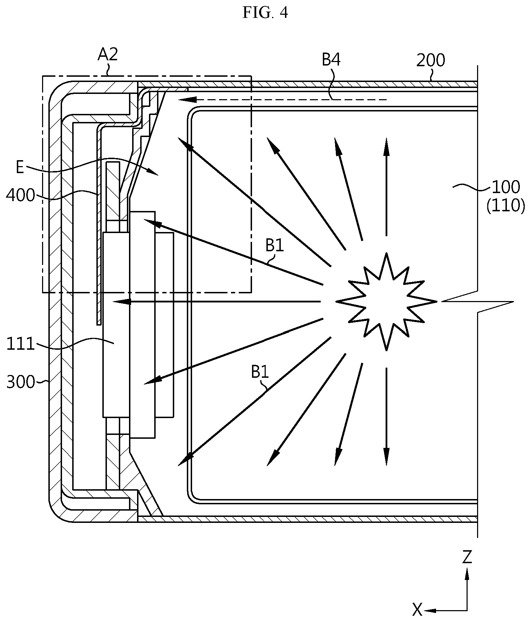

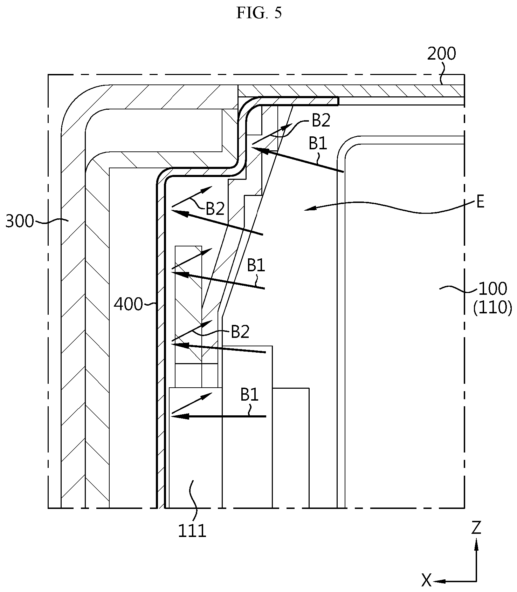

In particular, the blocking member 400 may be configured to block flame. This will be described in more detail with further reference to FIGS. 4 and 5.

FIG. 4 is a cross-sectional view showing a part of the battery module according to an embodiment of the present disclosure. For example, FIG. 4 shows a cross-sectional configuration along the line A1-A1' in FIG. 1, and may be regarded as a cross-sectional configuration of the front side of the battery module. Also, FIG. 5 is an enlarged view showing the portion A2 in FIG. 4.

Referring to FIGS. 4 and 5, the blocking member 400 may be configured to block the movement of flame generated from the cell assembly 100. More specifically, seeing FIG. 4 first, when a thermal event such as thermal runaway occurs in some of the battery cells 110 included in the cell assembly 100, flame may be discharged together with a venting gas as indicated by arrow B1. At this time, the flame discharged together with the venting gas may move in various directions, and its movement may be blocked at least when the flame reaches the blocking member 400. For example, referring to FIG. 5, when the flame moving as indicated by arrow B1 reaches the blocking member 400, it collides with the blocking member 400 and its movement is blocked, and as indicated by arrow B2, its movement direction may be switched to the inner side toward the cell assembly.

According to this embodiment of the present disclosure, the discharge of a flame ejected from the cell assembly 100 to the outside of the battery module may be suppressed. In particular, according to an embodiment of the present disclosure, since the blocking member 400 is located inside the end frame 300, even if a flame is generated from the cell assembly 100, it is possible to prevent such a flame from being discharged toward the end frame 300. Therefore, problems such as propagation of thermal runaway or fire to other components located outside the battery module may be prevented.

Moreover, on the end frame 300, other battery modules may be located or various connection components for transmitting power or data may exist. According to this embodiment of the present disclosure, it is possible to prevent a thermal runaway situation from propagating to such battery modules or to protect the connection components.

Meanwhile, the term "flame" used in this specification may include a form in which a solid or liquid material is heated as well as a form in which gas emits light while burning. For example, sparks or high-temperature active material particles discharged along with the venting gas from the battery cell 110 during thermal runaway may also be included in the flame blocked by the blocking member 400 in a broad sense.

As shown in FIG. 3, the cell assembly 100 may include a plurality of pouch-type batteries as the battery cell 110. Here, the plurality of pouch-type batteries may be arranged side by side in a horizontal direction, for example in a left and right direction, in a state of being erected in a vertical direction. In particular, each pouch-type battery may have electrode leads 111. In addition, the electrode leads 111 of each pouch-type battery may be disposed toward the open portion of the body frame 200. For example, the plurality of pouch-type batteries may be bidirectional cells, and the positive electrode leads and the negative electrode leads may be located at both front and rear ends. In this case, both front and rear ends of the body frame 200 may be configured in an open form, respectively, as indicated by O1 and O2. Therefore, the electrode lead 111 may be regarded as being disposed to face the open portion of the body frame 200. Moreover, the end frame 300 is positioned on the side of the open portion of the body frame 200, and the blocking member 400 may be positioned inside the end frame 300. Accordingly, the cell assembly 100 may be regarded as being disposed such that a side on which the electrode lead 111 is provided faces the blocking member 400.

In this embodiment, the blocking member 400 may be disposed at the outer side of the electrode lead 111. For example, when the electrode leads 111 are disposed to protrude on the front and rear sides of the cell assembly 100, two blocking members 400 may be positioned on the front outer side and the rear outer side of the cell assembly 100, respectively.

According to this embodiment of the present disclosure, the performance of blocking flame emitted from the cell assembly 100 may be further improved. In particular, when a large amount of venting gas or the like is generated inside the battery cell 110, the venting gas or the like may be concentrated in a terrace portion, as indicated by E in FIG. 4. Here, the terrace portion E may mean a sealing portion in which the electrode lead 111 is interposed, among several sealing portions formed on the edge of the pouch-type battery. When the internal pressure of the battery cell 110 exceeds a certain level, the terrace portion E may be ruptured or damaged, so that the flame may be discharged to the outside along with the venting gas. Alternatively, since the space where the terrace portion E is located in the cell assembly 100 has more empty space than other parts, a flame or the like is likely to be collected toward the terrace portion E. In addition, when a flame or the like is generated inside the battery module, the flame or the like has a high temperature characteristic, and a top sealing portion of each battery cell 110 is located on the upper side of the cell assembly 100. Therefore, after moving to the upper side of the cell assembly 100, the flame or the like is likely to move in the front and rear direction through the upper space of the cell assembly 100 and be concentrated toward the terrace portion E, as indicated by arrow B4 in FIG. 4.

At this time, if the blocking member 400 is located at the outer side of the terrace portion E, even if the flame is concentrated on the terrace portion E, it is possible to block the flame from moving toward the end frame 300. Therefore, it is possible to more effectively suppress the flame from being discharged to the outside of the battery module through the end frame 300.

Moreover, the blocking member 400 may be configured to block the movement of flame toward the terminal portion T and/or the connector portion C. That is, the blocking member 400 may be configured to block a flame from being directed toward the terminal portion T or the connector portion C of the end frame 300.

The terminal portion T or the connector portion C may be configured to have a structure in the form of a hole formed in the end frame 300, and a terminal located on the cell assembly 100 may be exposed to the outside through the hole. At this time, there is a high risk of flame, spark, or the like being discharged through a hole formed in the end frame 300, for example a terminal hole T1 or a connector hole C1. In particular, in the configuration in which a module terminal T2 or a connector terminal is exposed through the terminal hole T1 or the connector hole C1, there is a high possibility of flame being exposed due to tolerance or gap. Therefore, as in this embodiment, it is preferable that the blocking member 400 preferentially blocks the flame from being directed toward the terminal portion T or the connector portion C from the cell assembly 100.

According to this embodiment of the present disclosure, the risk of flame being exposed to the outside of the battery module may be further reduced. Therefore, it is possible to prevent heat propagation between modules due to flame exposure or to prevent damage or fire from occurring at other components located outside.

In particular, since a path through which a charging and discharging power of the battery module flows may be connected to the terminal portion T, it is possible to prevent such a charging and discharging power path from being blocked or damaged by a flame or the like. Accordingly, it is possible to prevent overall shutdown of a device to which the battery module belongs. In addition, a cable or the like for transmitting data related to the battery module may be connected to the connector portion C. According to this embodiment, it is possible to prevent or reduce a problem in which such a cable is damaged due to a flame or the like and thus related information such as a thermal runaway state is not properly transmitted.

The terminal portion T or the connector portion C may be located on the upper side of the battery module, particularly the end frame 300. Therefore, as shown in FIGS. 3 and 4, the terminal portion T may be configured to cover the upper portion at the inner side of the end frame 300. That is, the blocking member 400 may be configured to be elongated downward from the upper end of the cell assembly 100, but may extend only to the central portion of the cell assembly 100, instead of extending to the lower end of the cell assembly 100. That is, the blocking member 400 may be configured to cover the central portion and the upper portion at the inner side of the end frame 300.

According to this embodiment of the present disclosure, by the blocking member 400 located on the upper side, the flame may be blocked from being directed toward the terminal portion T or the connector portion C. In addition, the venting gas may detour and move toward the end frame 300 through a lower space in which the blocking member 400 is not provided. Therefore, the flame (spark or the like) with strong linearity may be restricted from moving toward the end frame 300, especially the terminal portion T or the connector portion C, by the blocking member 400, while the venting gas or the like may be moved and discharged smoothly toward the end frame 300 through the lower portion of the blocking member 400.

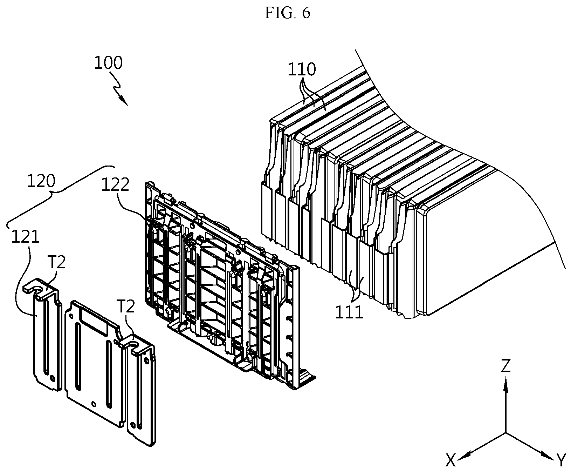

FIG. 6 is an exploded perspective view schematically showing some components of the cell assembly 100 according to an embodiment of the present disclosure.

Referring to FIG. 6, the cell assembly 100 may further include a bus bar unit 120.

The bus bar unit 120 may include a bus bar terminal 121 and a bus bar housing 122. The bus bar terminal 121 may be made of an electrically conductive material, for example a metal material such as copper, aluminum, or nickel. Also, the bus bar terminal 121 is in direct contact with the electrode lead 111, and may electrically connect two or more electrode leads 111. At this time, the electrode lead 111 and the bus bar terminal 121 may be coupled and fixed by a method such as laser welding or ultrasonic welding, but various other fastening methods may also be applied.

In addition, the bus bar terminal 121 may be connected to at least one electrode lead 111 to transmit sensing information to a control unit such as a battery management system (BMS). Moreover, the bus bar terminal 121 may be connected to the connector terminal.

The bus bar housing 122 may be made of an electrically insulating material, such as a plastic material. Also, the bus bar housing 122 may be configured such that the bus bar terminal 121 is seated and fixed in. Moreover, the bus bar housing 122 may have a slit. Also, the bus bar terminal 121 may be attached to the outer side of the bus bar housing 122, for example the front side. In this case, the electrode lead 111 may pass through the slit of the bus bar housing 122 and contact the bus bar terminal 121 located at the outer side. In particular, the electrode lead 111 may be coupled and fixed to the bus bar terminal 121 alone or in a stacked state of two or more electrode leads.

In addition, the bus bar unit 120 may include a module terminal T2. At this time, the module terminal T2 may be provided as a part of the bus bar terminal 121, or may be configured to be connected to the bus bar terminal 121 as a separate configuration from the bus bar terminal 121.

Meanwhile, even though FIG. 6 shows that the bus bar unit 120 is located on the front side of the battery module, a bus bar unit 120 of a similar form may also be provided on the rear side of the battery module.

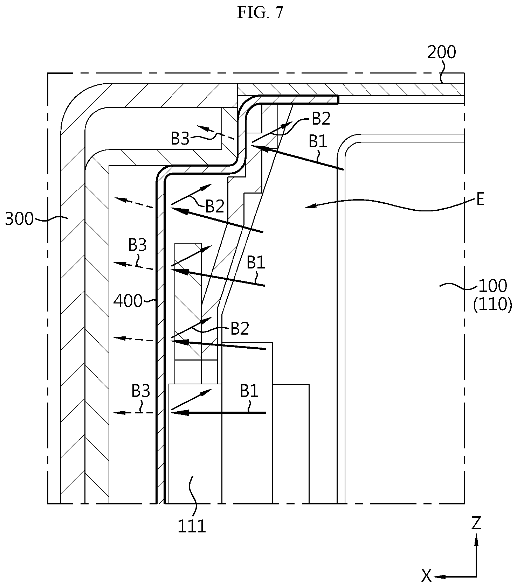

The blocking member 400 may be configured in an air-permeable structure. That is, the blocking member 400 may be configured to block flame while allowing the venting gas generated from the battery cell 110 inside the module to pass. This will be described in more detail with further reference to FIG. 7.

FIG. 7 is a diagram schematically showing a functional configuration of the blocking member 400 according to an embodiment of the present disclosure.

Referring to FIG. 7, when a venting gas, flame (spark), and the like are generated in a specific battery cell 110 among the plurality of battery cells 110 included in the cell assembly 100, the generated gas, flame, or the like may ejected and moved as indicated by arrow B1. In particular, as shown in FIG. 7, the venting gas, flame (spark), or the like may be collected in the terrace portion E, which is a portion indicated by E.

At this time, as indicated by the arrow B2 in FIG. 7, the flame or the like collected in the terrace portion E may be reflected by the blocking member 400, so that its movement toward the outside may be restricted. Therefore, according to this embodiment, it is possible to prevent the flame from moving toward the end frame 300 and being exposed to the outside.

In addition, the venting gas or the like composed of pure gas may pass through the blocking member 400 and continue to move toward the end frame 300, as indicated by arrow B3 in FIG. 7. To this end, the blocking member 400 may be formed of a material or shape having a permeable function so that gas can pass therethrough. For example, the blocking member 400 may be configured in a form having micropore or gap to allow the venting gas to pass through. As a more specific example, the blocking member 400 may have pores of 1 mm or less, moreover 100 µm or less, and even more 10 µm or less.

According to this embodiment, THE venting gas can be discharged toward the end frame 300 while suppressing the emission of the flame or the like. Therefore, the internal gas of the battery module where an event has occurred is quickly discharged to the outside while preventing the occurrence or spread of fire due to flame emission, so it is possible to block explosion of the battery module and alleviated the thermal runaway phenomenon.

The blocking member 400 may include a fabric portion. The fabric portion may be configured in a form in which a plurality of fibers are woven. In particular, the fabric portion may be configured in the form of a flat body having a predetermined area by densely weaving warp and weft yarns to intersect each other up and down. This fabric portion may be configured in the form of fibers or woven fabrics.

According to this embodiment of the present disclosure, the blocking member 400 may be manufactured more easily. In particular, according to this embodiment of the present disclosure, a configuration in which pores are formed to pass the venting gas while blocking the flame may be easily implemented. That is, by manufacturing a fabric (fiber) in which weft and warp yarns intersect, micropores having a size of several tens of µm to hundreds of µm may be naturally formed in the blocking member 400, and a separate process or structure for forming micropores is not required.

The blocking member 400 may be made of a material capable of withstanding a high temperature, for example a temperature of 400°C or more. In particular, the blocking member 400 may be formed of a material or shape having strong heat resistance and fire resistance so as not to be damaged by a high-temperature venting gas or flame (spark).

In particular, the blocking member 400 may be manufactured using at least one of silica fiber and glass fiber. For example, the blocking member 400 may be configured in a woven form in which silica fibers or glass fibers are densely woven. In this case, a blocking configuration that blocks the flame (including spark or the like) while allowing the venting gas to be discharged smoothly and may stably withstand high temperatures can be easily implemented.

The blocking member 400 may be made of a silica fiber or glass fiber material, or may be configured to include such a material. In addition, the blocking member 400 may be made of various other materials in addition to the silica fiber or glass fiber, or may be configured in a form including such a material.

For example, the blocking member 400 may include at least one of mica, silicon, carbon fiber reinforced plastic (CFRP), glass fiber reinforced plastic (GFRP), and aerogel blanket.

As a more specific example, the blocking member 400 may be configured in a form in which micropores are formed in GFRP. In this case, the flame may be effectively blocked while the venting gas is discharged through the blocking member 400.

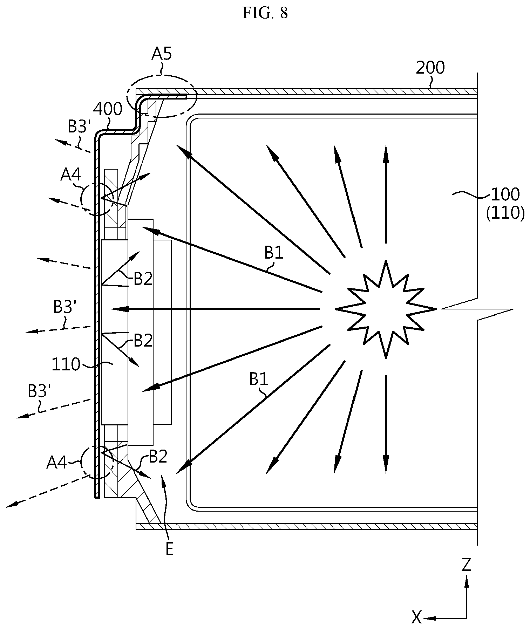

The blocking member 400 may be configured to partially have different permeability. This will be described in more detail with reference to FIG. 8.

FIG. 8 is a diagram schematically showing a functional configuration of a blocking member 400 included in a battery module according to another embodiment of the present disclosure.

Referring to FIG. 8, the venting gas, flame, or the like may be discharged from the battery cell 110 as indicated by an arrow B1 and be directed toward the blocking member 400. At this time, the flame may be blocked from moving outward without passing through the blocking member 400, as indicated by arrow B2. Meanwhile, unlike the flame, the venting gas may pass through the blocking member 400 at least partially, as indicated by arrow B3'.

In particular, the blocking member 400 may be configured such that the permeability of the venting gas, namely whether the venting gas can pass through or not or how much the venting gas passes, is partially different. In FIG. 8, the configuration in which the venting gas passes is indicated by arrow B3'. In addition, the degree of passage of the venting gas is indicated by the difference in length of the arrow B3'. That is, in FIG. 8, the higher the permeability of the venting gas, the longer the length of the arrow.

According to this embodiment, with respect to the blocking member 400, the possibility of passage of the venting gas and the degree of passage of the venting gas can be configured differently for each part, so that the effect of blocking or controlling the direction of the venting gas or flame may be further enhanced. For example, for a part where the flame or the like must be surely prevented, the permeability of the venting gas may be lowered to suppress leakage of the flame through the pores of the blocking member 400 as much as possible. Meanwhile, for a part where the need for flame blocking is relatively low, the venting gas discharge performance may be further enhanced by widening the pores.

Moreover, according to this embodiment, the blocking member 400 may be configured to extend from the upper end of the battery cell 110 to the lower end. For example, as shown in FIG. 8, the blocking member 400 is easily configured to be elongated from the upper end of the battery cell 110 to the lower end. In this case, the configuration capable of blocking flame while passing the venting gas may be provided as a whole from the upper end of the end frame 300 to the lower end.

In this embodiment, the configuration in which the blocking member 400 has partially different permeability may be implemented in various forms. For example, the blocking member 400 may be partially configured to have different pore sizes. Alternatively, the blocking member 400 may be partially configured to include a material having different permeability. Alternatively, the blocking member 400 may be partially configured to have different thicknesses. In this case, a thin portion may have higher permeability than a thick portion. In addition, the blocking member 400 may be configured in a woven form, so that its wefts and/or warps have partially different thicknesses. In this case, a thick portion of the wefts or warps may have lower permeability than a thin portion.

In the blocking member 400, an upper portion may have lower permeability than a lower portion. For example, as shown in FIG. 8, the blocking member 400 may be configured such that permeability gradually increases from top to bottom. As a more specific example, the upper portion of the blocking member 400 may be configured to have a permeability of about 50% or less compared to the permeability of the lower portion. Moreover, the blocking member 400 may be configured such that the permeability of the upper portion is smaller than the lower permeability, for example to be 30% or less. In particular, the blocking member 400 may be configured such that the permeability of the top end becomes 0. In this case, the upper end of the blocking member 400 may be regarded as being completely blocked without air permeability.

In this embodiment, even if a similar amount of venting gas reaches the upper portion and the lower portion of the blocking member 400, respectively, the amount of venting gas passing through the upper portion of the blocking member 400 may be small or not, and the amount of venting gas passing through the lower portion of the blocking member 400 may be large.

According to this embodiment of the present disclosure, since the venting gas passes through the upper portion of the blocking member 400 but not in a large amount, it is possible to minimize the emission of flame or the like through the pores or gap in the blocking member 400. Meanwhile, at the lower portion of the blocking member 400, it is possible to more quickly discharge the venting gas by increasing the venting gas discharge effect rather than the flame blocking effect.

In particular, since the flame may have a strong property of moving to the upper portion of the blocking member 400, according to this embodiment, it may be more advantageous to suppress the discharge of the flame. In addition, since the upper portion of the blocking member 400 is likely to face the terminal portion T or the connector portion C of the end frame 300, by suppressing the flame directed toward the upper portion of the blocking member 400 as much as possible, it is possible to prevent the frame to be exposed to the terminal portion T or the connector portion C. Moreover, above a battery module used in a vehicle or the like, a passenger such as a driver may be located. Therefore, if the flame directed to the upper side is blocked as in this embodiment, the occupant's safety may be further improved.

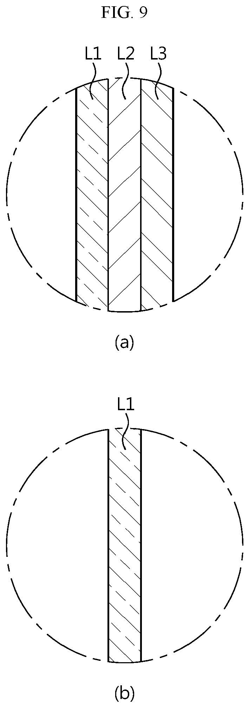

The blocking member 400 may be partially configured to have different stack numbers. In particular, the blocking member 400 may be configured such that the stack number of the upper portion is greater than the stack number of the lower portion. This will be described in more detail with reference to FIG. 9.

FIG. 9 is an enlarged view schematically showing configurations of different parts of one blocking member 400 according to an embodiment of the present disclosure. For example, (a) of FIG. 9 is an example of an enlarged configuration for the upper portion of the blocking member 400, for example the portion A3 of FIG. 8, and (b) of FIG. 9 is an example of an enlarged configuration for the lower portion of the blocking member 400, for example the portion A4 of FIG. 8.

First, referring to (a) of FIG. 9, the blocking member 400 may be at least partially configured to have a plurality of layers. For example, the upper portion of the blocking member 400 may be configured to have three stacked structures, as indicated by L1, L2, and L3. In this case, the unit layers may be configured in the same form or in different forms. For example, each of the three unit layers may be configured in a form in which silica fibers or glass fibers are woven. In particular, the three unit layers may be configured to have pores of different sizes. Alternatively, the three unit layers may be arranged in a staggered manner so that the pores are not arranged side by side with each other in the horizontal direction. In this case, the upper portion of the blocking member 400 may be configured to have low permeability.

Next, referring to (b) of FIG. 9, another part of the blocking member 400 may be configured to have one layer. For example, the lower portion of the blocking member 400 may have a single-layer structure, as indicated by L1. In this case, the unit layer shown in (b) of FIG. 9 may be one of the three unit layers shown in (a) of FIG. 9. That is, in the embodiment of FIGS. 8 and 9, the blocking member 400 may be configured to have three unit layers of L1, L2, and L3 at the upper portion, so that only one unit layer L1 among the three unit layers is elongated to the lower portion. In this case, the lower portion of the blocking member 400 may be configured to have relatively higher permeability than the upper portion.

According to this embodiment, the blocking member 400 partially having different permeability may be easily implemented. In particular, as in this embodiment, the configuration partially having different permeability may be easily derived only by partially changing the stack number of the blocking member 400 configured in the form of a fiber.

Meanwhile, the blocking member 400 partially having different permeability may be implemented in various other ways. For example, when the blocking member 400 is configured to include a fabric portion, the fabric portion of the upper portion and the fabric portion of the lower portion may have micropores of different sizes. In particular, the fabric portion of the upper portion may be woven with fibers having a greater thickness than the fabric portion of the lower portion. In this case, the size of micropores in the fabric portion of the upper portion may be smaller than the size of micropores of the fabric portion of the lower portion.

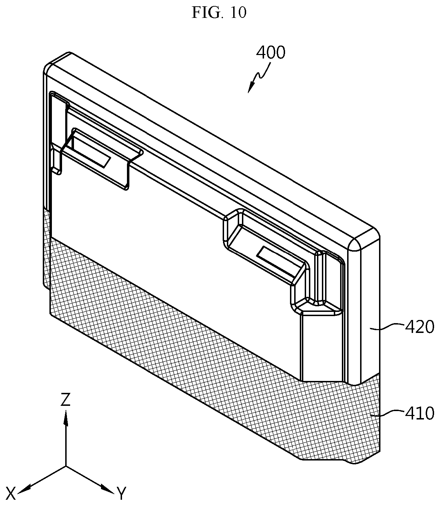

FIG. 10 is a perspective view schematically showing a configuration of a blocking member 400 included in a battery module according to still another embodiment of the present disclosure.

Referring to FIG. 10, the blocking member 400 may further include a body portion 420 together with a fabric portion 410. The body portion 420 may be configured to have a different shape from the fabric portion 410. In particular, the body portion 420 may be configured to have lower air permeability than the fabric portion 410. Moreover, the body portion 420 may also be configured to have zero permeability so that the venting gas does not pass. Alternatively, the body portion 420 may also be configured to have permeability above a certain level. For example, the body portion 420 may be configured to have micropores formed therein.

The body portion 420 may be made of various materials capable of blocking flame and withstanding high temperature. For example, the body portion 420 may be configured in the form of an injection molding of heat-resistant plastic. Alternatively, the body portion 420 may be made of mica or silicon. Alternatively, the body portion 420 may be made of a material such as CFRP or GFRP.

In this embodiment, compared to the fabric portion 410, the body portion 420 may be easily configured to be advantageous for flame blocking. Also, according to this embodiment, the body portion 420 may be advantageous in having structural stability, compared to the fabric portion 410. Accordingly, the body portion 420 may serve to stably maintain the position and shape of the fabric portion 410 inside the battery module. In particular, when the fabric portion 410 is configured in a woven type, the fabric portion 410 may be difficult to maintain the shape, but when the body portion 420 is provided together, the structure of the fabric portion 410 may be more stably maintained.

In this embodiment, the fabric portion 410 may be located in a part of the body portion 420. For example, in the embodiment of FIG. 10, the fabric portion 410 may be positioned at a lower end of the body portion 420. At this time, the fabric portion 410 may be coupled and fixed to the body portion 420 in various forms. For example, the fabric portion 410 may be provided only at the lower end of the body portion 420 and coupled and fixed to the lower end of the body portion 420 in various ways, such as bolting, bonding, welding, insertion, or hooking.

If the body portion 420 is located in the upper portion and the fabric portion 410 is located in the lower portion as in this embodiment, the flame blocking effect may be stably achieved through the body portion 420, while the venting gas discharge effect may be smoothly performed through the fabric portion 410. In particular, since the flame has a property of moving toward the upper portion, and the terminal portion T or the connector portion C is often located at the upper portion. Thus, when the body portion 420 is located at the upper portion of the blocking member 400, it may be more suitable to secure safety through flame blocking. In addition, according to this embodiment, since the fabric portion 410 and the body portion 420 are positioned only on a part of the blocking member 400, it is more advantageous to reduce the weight of the battery module or reduce production costs.

As another example, the fabric portion 410 may be configured to be inserted into the body portion 420. As a more specific example, the body portion 420 is made of a plastic material, and the fabric portion 410 made of silica fiber or glass fiber may be manufactured in an insert-injected form. Moreover, in this case, the fabric portion 410 may be configured to be inserted into the whole inside of the body portion 420, for example from the upper portion to the lower portion of the body portion 420. According to this embodiment, the coupling between the fabric portion 410 and the body portion 420 may be secured more stably, while the flame blocking effect may be further improved in the body portion 420. In addition, in this embodiment, since the fabric portion 410 allows the venting gas to be smoothly discharged, the venting gas may be discharged quickly.

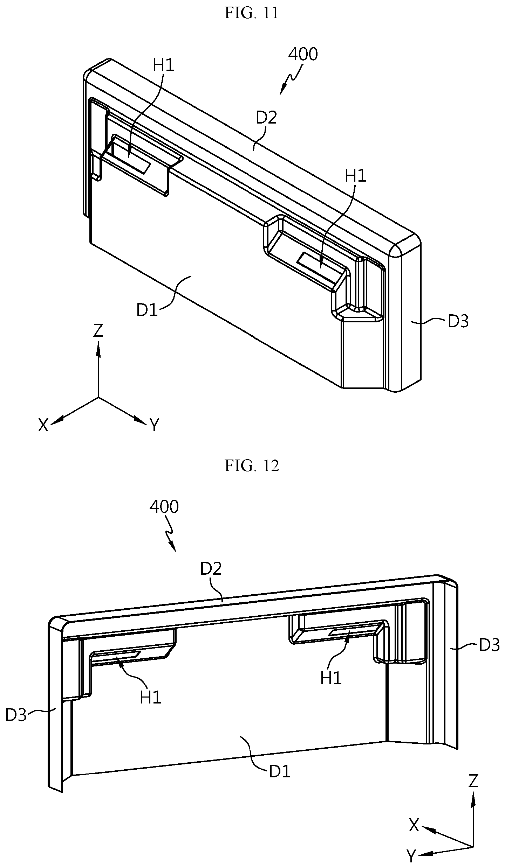

The blocking member 400 may be configured such that an upper end is bent toward the cell assembly 100. This will be described in more detail with further reference to FIGS. 11 and 12.

FIGS. 11 and 12 are perspective views schematically showing a configuration of a blocking member 400 included in the battery module according to an embodiment of the present disclosure as viewed from the front and rear. For example, FIGS. 11 and 12 may be enlarged views showing the configuration of the blocking member 400 disposed on the front side of the battery module in FIG. 3.

Referring to FIGS. 11 and 12, the blocking member 400 may include a cover portion formed in a substantially erected plate shape to cover the front side of the cell assembly 100, as indicated by D1. At this time, a perforated hole may be formed in the cover portion D1, as indicated by H1. The module terminal T2 or the connector terminal of the cell assembly 100 described above may pass through the perforated hole H1. Also, the blocking member 400 may have a top bent portion bent to the rear side (-X-axis direction) toward the battery cell 110 at the upper end of the cover portion D1, as indicated by D2. In this case, the top bent portion D2 of the blocking member 400 may be configured to surround an end of the upper portion of the cell assembly 100.

According to this embodiment of the present disclosure, the coupling between the cell assembly 100 and the blocking member 400 may be further improved. Also, according to this embodiment, it is possible to more reliably prevent the flame or the like from being directed from the battery cell 110 toward the upper portion.

For example, inside the battery module, the top bent portion D2 of the blocking member 400 may be disposed as indicated by A5 in the embodiment of FIG. 8. In this embodiment, the flame directed from the battery cell 110 toward the blocking member 400 may be blocked by the blocking member 400 and then bent upward as indicated by arrow B2. However, in this embodiment, the flame blocked by the blocking member 400 may be suppressed from moving toward the upper portion of the battery module by the top bent portion D2 of the blocking member 400. Therefore, it may be more advantageous to protect occupants or the like located above the battery module.

In addition, the blocking member 400 may include a side bent portion bent toward the battery cell 110 from the side portion of the cover portion D1, as indicated by D3 in FIGS. 11 and 12. For example, when the blocking member 400 of FIGS. 11 and 12 is a member positioned on the front side of the cell assembly 100, the left end and the right end may be configured to be bent backward toward the cell assembly 100 as indicated by D3. In this case, the side bent portion D3 of the blocking member 400 may be configured to cover the ends of the left side and the right side of the cell assembly 100.

According to this embodiment of the present disclosure, it is advantageous to increase the coupling force between the cell assembly 100 and the blocking member 400, and it is possible to more securely prevent the flame emitted from the battery cell 110 from leaking through the gap between the blocking member 400 and the body frame 200.

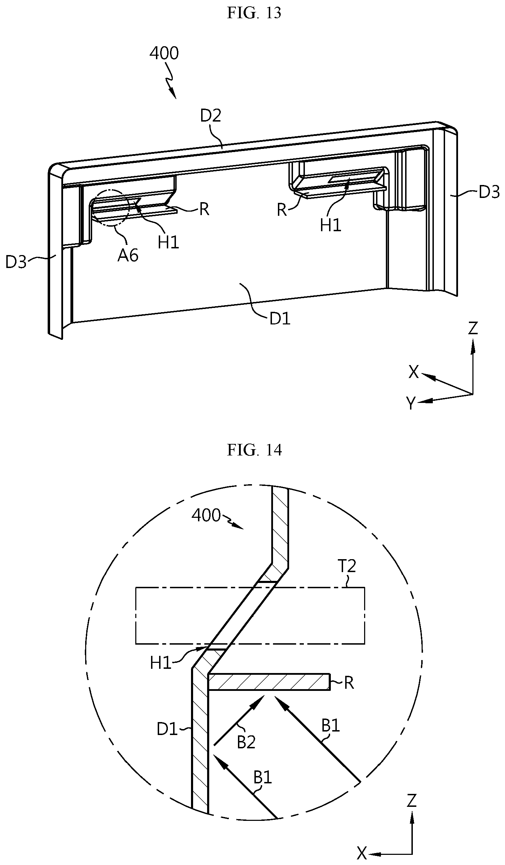

FIG. 13 is a perspective view showing a configuration of a blocking member 400 included in a battery module according to another embodiment of the present disclosure as viewed from the rear. For example, FIG. 13 may be regarded as a modified example of FIG. 12. FIG. 14 is an enlarged cross-sectional view showing the portion A6 in FIG. 13.

Referring to FIGS. 13 and 14, the blocking member 400 may include a blocking rib as indicated by R around the perforated hole H1. Here, the module terminal T2 or the like may pass through the perforated hole H1 of the blocking member 400, as indicated by a dotted line in FIG. 14. In addition, the blocking rib R may be configured in a form protruding inward toward the cell assembly 100 around the perforated hole H1. For example, the blocking member 400 located on the front side of the cell assembly 100 may include a blocking rib R in the form of protruding and extending to the rear (-X-axis direction) on the inner surface.

Moreover, the module terminal T2 or the connector terminal is often located at the upper portion of the battery module. In this case, the perforated hole H1 may be located at the upper portion of the blocking member 400. In this configuration, the blocking rib R may be located below the perforated hole H1. Therefore, it may be regarded that the blocking rib R is located below the module terminal T2 or the connector terminal.

According to this embodiment of the present disclosure, it is possible to more securely prevent the flame or the like from leaking through the perforated hole H1 of the blocking member 400. For example, referring to FIG. 14, when the flame or the like is ejected from the battery cell 110, the flame or the like may move as indicated by arrow B1. At this time, the blocking rib R may block the flame from directly moving toward the perforated hole H1. In addition, the flame may be reflected from the inner surface of the blocking member 400 and continue to move, as indicated by arrow B2. According to this embodiment, it is possible to suppress the flame from being discharged to the outside through the perforated hole H1 as much as possible by blocking even the flame that moves in the form reflected by the inner surface of the blocking member 400 as above.

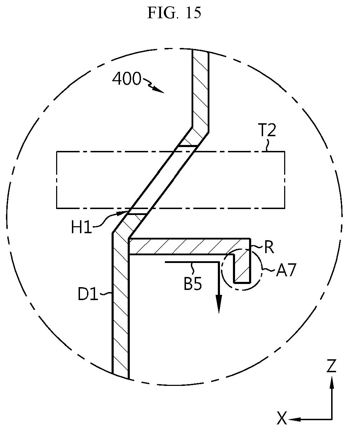

FIG. 15 is an enlarged cross-sectional view showing some components of a blocking member 400 according to still another embodiment of the present disclosure. For example, FIG. 15 may be a modified example of the embodiment of FIG. 14.

Referring to FIG. 15, the blocking member 400 includes a blocking rib R, and an end of the blocking rib R may be configured in a bent shape. For example, the blocking rib R may be formed to protrude and extend inward in a horizontal direction from the cover portion D1 of the blocking member 400, and may have an inner end bent downward, as indicated by A7.

According to this embodiment of the present disclosure, the flame discharge suppression effect of the blocking rib R for the perforated hole H1 may be further increased. For example, the flame reaching the lower surface of the blocking rib R may be directed downward by the inner bent portion of the blocking rib R, as indicated by arrow B5. Therefore, since the flame moves further away from the perforated hole H1, the possibility of the flame being exposed through the perforated hole H1 may be further reduced.

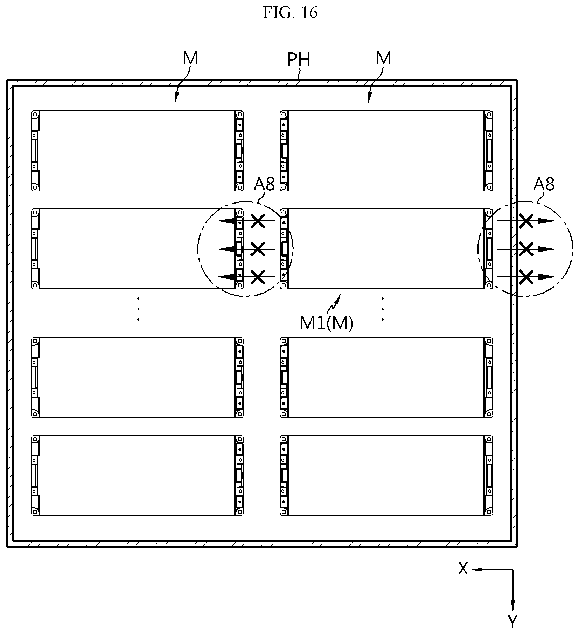

FIG. 16 is a diagram schematically showing a configuration of a battery pack according to an embodiment of the present disclosure as viewed from the above.

Referring to FIG. 16, the battery pack according to the present disclosure may include at least one battery module M according to the present disclosure. In particular, when a plurality of battery modules M are included inside the pack housing PH, the battery pack according to the present disclosure may effectively prevent a thermal event from propagating between the battery modules. Moreover, according to an embodiment of the present disclosure, a venting gas may be discharged from a specific battery module indicated as M1, as indicated by A8 in FIG. 16. However, in this case, a heat source such as a flame (spark or the like) may not exist in the discharged venting gas, as indicated by X. Therefore, it is possible to prevent damage caused by flame between the battery modules M or propagation of thermal runaway.

In addition, the battery pack according to the present disclosure may further include various other components in addition to the battery modules, for example various components of a battery pack known at the time of filing of this application such as a BMS (Battery Management System), a bus bar (for connection between the battery modules, connection between the battery module and the pack terminal, or the like), a relay, and a current sensor.

Meanwhile, the components such as a BMS, a bus bar, a relay, and a current sensor may be included as components of the battery module according to the present disclosure. In this case, the components such as a BMS, a bus bar, a relay, and a current sensor may be located inside the module case that includes the body frame 200 and the end frame 300. In this case, the battery module may be referred to as a battery pack, and the module case may also be referred to as a pack case or a pack housing.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: cell assembly
110: battery cell
111: electrode lead
120: bus bar unit
121: bus bar terminal, 122: bus bar housing
200: body frame
300: end frame
310: front frame, 320: rear frame
400: blocking member
410: fabric portion, 420: body portion
T: terminal portion
T1: terminal hole, T2: module terminal
C: connector portion
C1: connector hole
E: terrace portion
D1: cover portion, D2: top bent portion, D3: side bent portion
H1: perforated hole
R: blocking rib
M: battery module
PH: pack housing
Preferred examples of the Invention are specified in the following items:
Item 1. A battery module, comprising:
   a cell assembly having at least one battery cell;
   a body frame configured to accommodate the cell assembly in an inner space and having an open portion formed in at least one side;
   an end frame coupled to the open portion of the body frame and having at least one of a terminal portion and a connector portion; and
   a blocking member interposed between the end frame and the cell assembly and configured to block the movement of flame.
Item 2. The battery module according to item 1,
   wherein the cell assembly includes a plurality of pouch-type batteries arranged in a horizontal direction in a form where electrode leads are disposed toward the open portion of the body frame.
Item 3. The battery module according to item 1,
   wherein the blocking member is configured to block the movement of flame toward at least one of the terminal portion and the connector portion.
Item 4. The battery module according to item 1,
   wherein the blocking member has an air-permeable structure.
Item 5. The battery module according to item 1,
   wherein the blocking member includes a fabric portion configured in a woven form of a plurality of fibers.
Item 6. The battery module according to item 5,
   wherein the fabric portion uses at least one of silica fiber and glass fiber.
Item 7. The battery module according to item 5,
   wherein the blocking member further includes a body portion.
Item 8. The battery module according to item 7,
   wherein the fabric portion is located in a part of the body portion.
Item 9. The battery module according to item 1,
   wherein the blocking member is partially configured to have different permeability.
Item 10. The battery module according to item 9,
   wherein the blocking member is configured such that an upper portion has lower permeability than a lower portion.
Item 11. The battery module according to item 10,
   wherein the blocking member is configured such that an upper portion has a greater stack number than a lower portion.
Item 12. The battery module according to item 1,
   wherein the blocking member has an upper end bent toward the cell assembly.
Item 13. A battery pack, comprising the battery module according to any one of items 1 to 12.
Item 14. A vehicle, comprising the battery module according to any one of items 1 to 12.

## Claims

1. A battery module, comprising:
a cell assembly (100) having at least one battery cell (110);
a body frame (200) configured to accommodate the cell assembly (100) in an inner space and having an open portion formed in at least one side;
an end frame (300) coupled to the open portion of the body frame (200) and having at least one of a terminal portion (T) and a connector portion (C) located on the upper side of the end frame (300); and
a blocking member (400) interposed between the end frame (300) and the cell assembly (100) and configured to block the movement of flame,
wherein the blocking member (400) is partially configured to have different permeability.

2. The battery module according to claim 1,
wherein the cell assembly (100) includes a plurality of pouch-type batteries (110) arranged in a horizontal direction in a form where electrode leads (111) are disposed toward the open portion of the body frame (200).

3. The battery module according to claim 1,
wherein the blocking member (400) is configured to block the movement of flame toward at least one of the terminal portion (T) and the connector portion (C).

4. The battery module according to claim 1,
wherein the blocking member (400) has an air-permeable structure.

5. The battery module according to claim 1,
wherein the blocking member includes a fabric portion configured in a woven form of a plurality of fibers.

6. The battery module according to claim 5,
wherein the fabric portion (410) uses at least one of silica fiber and glass fiber.

7. The battery module according to claim 5,
wherein the blocking member further includes a body portion.

8. The battery module according to claim 7,
wherein the fabric portion (410) is located in a part of the body portion (420).

9. The battery module according to claim 1,
wherein the blocking member (400) is configured such that an upper portion has lower permeability than a lower portion.

10. The battery module according to claim 9,
wherein the blocking member (400) is configured such that an upper portion has a greater stack number than a lower portion.

11. The battery module according to claim 1,
wherein the blocking member (400) has an upper end bent toward the cell assembly (100).

12. A battery pack, comprising the battery module according to any one of claims 1 to 11.

13. A vehicle, comprising the battery module according to any one of claims 1 to 11.
